# DEMANDE DE BREVET EUROPEEN

(11) **EP 1 798 626 A1**
(43) Date de publication de la demande: **20.06.2007**
(21) Numéro de dépôt: 06023699.9
(22) Date de dépôt: 15.11.2006
(51) Int. Cl.: G05F 1/46, H02M 3/07

(54) **Circuit de régulation de tension, notamment pour pompe de charge**

(30) Priorité: 13.12.2005 FR 0512574
(71) Demandeur: STMICROELECTRONICS SA, 92120 Montrouge (FR)
(72) Inventeur: Tailliet, Francois, 13710 Fuveau (FR)
(74) Mandataire: Marchand, André

(57) **Abrégé**

L'invention concerne un dispositif de régulation de tension comprenant un régulateur de tension (RGCT) pour réguler une tension continue (Vpp) fournie par un générateur de tension (HVCT), le régulateur de tension comprenant des moyens (I1) pour arrêter ou activer le générateur de tension selon que la tension à réguler est supérieure ou inférieure à une tension de consigne (Vreg). Selon l'invention, le dispositif de régulation comprend un limiteur de tension (E2, E3) ayant une première tension de seuil (Vth) supérieure à la tension de consigne (Vreg) pour écrêter une surtension transitoire supérieure à la première tension de seuil, apparaissant dans la tension à réguler (Vpp). Application de l'invention à la régulation de la haute tension utilisée pour programmer ou effacer une mémoire non volatile.

## Description

La présente invention concerne un circuit de régulation de tension, utilisable notamment à la sortie d'un circuit survolteur.

Les circuits survolteurs comme les pompes de charge permettent de produire une tension électrique continue supérieure à une tension d'alimentation déterminée. Dans le domaine des circuits intégrés, on utilise des pompes de charge pour produire par exemple la haute tension Vpp d'effacement et programmation des transistors à grille flottante des mémoires effaçables et programmables électriquement (EEPROM, FLASH, FLASH-EEPROM...).

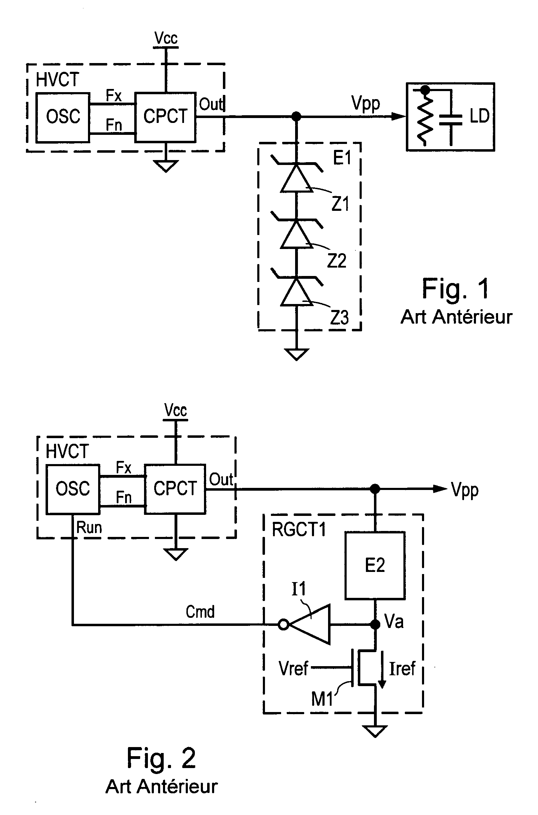

La figure 1 représente schématiquement un circuit survolteur HVCT comprenant une pompe de charge CPCT fournissant sur une sortie Out une tension survoltée Vpp à une charge LD. Dans le cas d'une mémoire EEPROM ou FLASH, la pompe de charge alimente une charge capacitive et résistive LD dont la capacité est égale à la somme des capacités parasites de grille d'un ensemble de transistor à grille flottante à effacer ou à programmer simultanément.

La pompe de charge CPCT est pilotée par des signaux d'horloge Fx, Fn en opposition de phase fournis par un oscillateur OSC. La pompe de charge comprend une pluralité d'étages de pompage en cascade dont la structure, bien connue de l'homme de l'art, n'est pas représentée ici. La pompe de charge reçoit en entrée une tension d'alimentation Vcc de l'ordre de 2 à 5 volts. L'amplitude de la tension Vpp dépend du nombre total d'étages de pompage en cascade et est par ailleurs proportionnelle à la tension Vcc.

Typiquement, pour programmer ou effacer une mémoire EEPROM, le circuit survolteur doit pouvoir fournir une tension de l'ordre de 15 à 18 V sous un courant de quelques dizaines de microampères. Si la tension appliquée à la mémoire est trop faible, les cellules mémoire programmées ou effacées sont dans un état incertain. Il en résulte que la mémoire ne sera pas fonctionnelle. Au contraire, si la tension appliquée à la mémoire est trop élevée, les transistors des cellules mémoire et de l'étage haute tension subissent inutilement un stress qui réduit la durée de vie de la mémoire (vieillissement des transistors, claquage des oxydes de grille des transistors à grille flottante, ...). Pour ces raisons, il est préconisé de limiter à environ 1 V les variations de la haute tension appliquée à la mémoire. Ces variations tiennent compte des variations de température, de la tension d'alimentation, de la consommation en sortie du circuit survolteur, et de la technologie de fabrication de la mémoire.

Or, la pompe de charge d'un circuit survolteur est généralement prévue avec un nombre d'étages de pompage supérieur au nombre d'étages théoriquement suffisant, afin de pouvoir supporter une large gamme de tensions de fonctionnement et pour compenser l'impédance interne élevée de la pompe de charge. De ce fait, après une période de démarrage, la pompe de charge peut délivrer une tension Vpp supérieure au seuil Vppmax au-delà duquel des transistors à effacer ou à programmer pourraient être endommagés. D'autre part, la tension d'alimentation Vcc peut fluctuer fortement par rapport à sa valeur nominale prise en compte lors de la conception de la pompe de charge, et une augmentation de la tension Vcc peut entraîner une augmentation correspondante de la tension Vpp au-delà du seuil Vppmax.

Un contrôle de la tension Vpp doit ainsi être prévu, afin de ne pas dépasser le seuil Vppmax. Comme illustré en figure 1, ce contrôle peut être assuré par un simple circuit limiteur de tension E1 connecté en parallèle entre la sortie Out de la haute tension Vpp et la masse. Le circuit E1 comprend par exemple trois diodes Zener Z1, Z2, Z3 montées en série, présentant chacune une tension de seuil de l'ordre de 5V. La tension de seuil de conduction du limiteur de tension est la somme des tensions de seuil de chacune des diodes, par exemple 15V. Le circuit survolteur débite donc en permanence dans le circuit E1 dont la conduction augmente rapidement à partir du seuil de conduction. Le circuit E1 permet ainsi de maintenir la haute tension Vpp en sortie du circuit survolteur à la tension de seuil de conduction qui dépend du nombre et des caractéristiques des diodes Zener du circuit E1. L'emploi d'un tel limiteur de tension présente toutefois un inconvénient sur le plan énergétique. Le circuit survolteur HVCT débite dans le limiteur de tension E1 un courant qui peut être supérieur à la consommation utile dans le circuit. Il en résulte que la mémoire équipée du limiteur de tension présente une consommation élevée en programmation et en effacement.

La figure 2 représente schématiquement un circuit survolteur HVCT associé à un circuit de régulation de tension RGCT1 présentant un meilleur rendement sur le plan énergétique qu'un simple limiteur de tension. Le circuit RGCT1 arrête ou active le circuit survolteur selon que la tension à réguler est supérieure ou inférieure à une tension de consigne.

Plus précisément, le circuit RGCT1 comprend un circuit abaisseur de tension E2 présentant une tension de seuil de conduction VE2. Le circuit E2 reçoit en entrée la haute tension Vpp fournie par une sortie Out du circuit survolteur HVCT, et fournit en sortie une tension abaissée Va. Le circuit abaisseur de tension E2 est relié à la masse par l'intermédiaire d'un transistor M1 dont la source est connectée à la masse. Une tension de référence Vref est appliquée à la grille du transistor M1. Le transistor M1 se comporte comme une source de courant débitant un courant Iref qui assure la polarisation du circuit E2. Le circuit E2 abaisse la tension Vpp appliquée en entrée d'une valeur constante égale à la tension de seuil de conduction VE2 si la tension Vpp est supérieure à la tension VE2. La tension abaissée Va en sortie du circuit E2 est appliquée à l'entrée d'un inverseur I1 qui fournit un signal de commande Cmd à une entrée d'activation Run de l'oscillateur OSC du circuit survolteur HVCT.

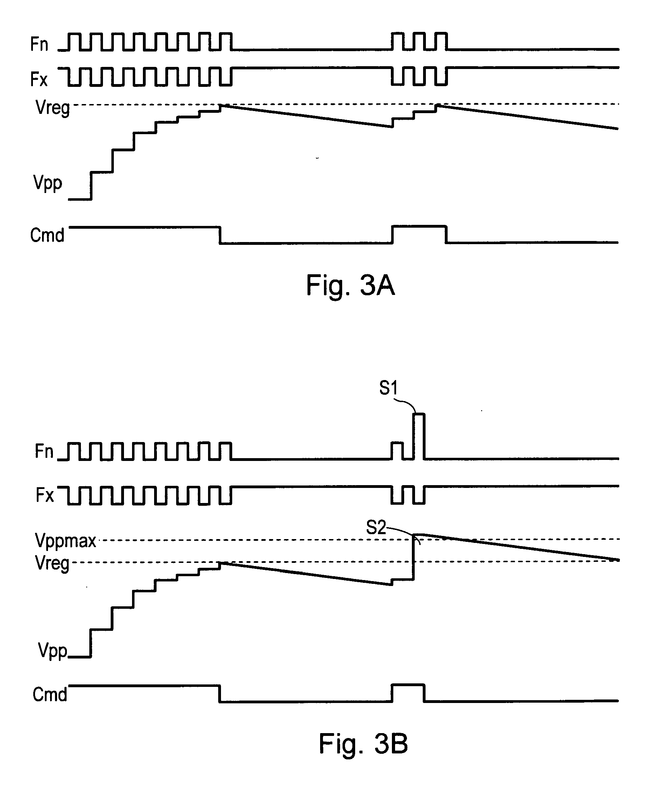

La figure 3A illustre sous la forme de chronogrammes le fonctionnement du circuit de régulation. La figure 3A représente la forme des deux signaux d'horloge Fx et Fn en opposition de phase, les variations de la tension Vpp, et du signal de commande appliquée sur l'entrée Run de l'oscillateur. Au démarrage de l'oscillateur OSC, le signal Cmd est à 1 et la tension Vpp augmente progressivement jusqu'à atteindre une tension de consigne Vreg. Lorsque la tension survoltée Vpp atteint la tension Vreg, la tension abaissée Va à l'entrée de l'inverseur Il est suffisante pour faire basculer l'inverseur I1. Le signal de sortie Cmd de l'inverseur I1 passe alors à 0, ce qui arrête l'oscillateur OSC et donc désactive le circuit CPCT. La tension de consigne Vreg est donc égale à VE2 + VI1, VI1 étant la tension de basculement de l'inverseur I1. L'inverseur I1 se comporte donc comme un comparateur qui fournit un signal binaire à 0 ou à 1 selon que la tension appliquée en entrée est inférieure ou supérieure à sa tension de basculement VI1.

Pendant que le circuit survolteur HVCT est désactivé, la tension Vpp décroît jusqu'à atteindre une valeur inférieure à la tension Vreg. La tension Va à l'entrée de l'inverseur I1 redescend en dessous de la tension de basculement de ce dernier. Le signal Cmd repasse alors à 1, ce qui réactive l'oscillateur et donc la pompe de charge CPCT jusqu'à ce que la tension Vpp atteigne à nouveau la tension Vreg. Le circuit RGCT1 effectue donc une régulation de type tout ou rien. La tension Vreg est choisie inférieure ou égale à la tension Vppmax au delà de laquelle la mémoire peut être endommagée. La stabilité de la régulation de tension ainsi obtenue est conférée par la capacité interne du circuit HVCT, qui joue le rôle d'intégrateur.

Le courant susceptible de passer dans le circuit E2 est limité au courant Iref produit par la source de courant. Par contre, ce courant n'est pas limité dans le circuit représenté sur la figure 1. La régulation effectuée par le circuit RGCT1 est donc avantageuse en terme de consommation électrique et de souplesse d'emploi, mais présente une réponse instantanée assez lente. En particulier, elle ne permet pas d'absorber une surtension transitoire au niveau de la sortie de la pompe de charge. Cet inconvénient est illustré par les chronogrammes représentés sur la figure 3B. Une surtension au niveau de la tension d'alimentation Vcc peut entraîner un accroissement brutal S1 de l'amplitude de l'un des signaux d'horloge Fn, Fx. L'accroissement brutal S1 risque d'être répercuté instantanément sous la forme d'une surtension S2, par la pompe de charge CPCT sur la tension Vpp, principalement en raison du fait que la réponse de l'inverseur I1 et la réaction du circuit survolteur à une commande d'arrêt ne sont pas instantanées. Le transfert de la surtension S1 sur la tension Vpp est aussi en partie dû à un couplage capacitif avec la tension d'alimentation Vcc, produit par un condensateur de filtrage généralement prévu en sortie de la pompe de charge. Il en résulte que la surtension S2 qui apparaît ainsi dans la tension Vpp dépasse la tension de consigne Vreg avant l'arrêt de la pompe de charge. En outre, l'arrêt de la pompe de charge (signal Cmd à 0) n'entraîne pas un écrêtage de la surtension S2 qui peut ainsi dépasser la tension Vppmax.

En résumé, le dispositif de limitation de tension E1 représenté sur la figure 1 apporte une bonne protection contre les surtensions transitoires, mais est peu performant sur le plan énergétique. Au contraire, le dispositif de régulation RGCT représenté sur la figure 2 est performant sur le plan énergétique, mais n'est pas assez rapide pour écrêter toutes les surtensions transitoires.

La présente invention vise à réaliser une régulation de tension qui offre à la fois une bonne protection contre les surtensions transitoires et une faible consommation d'énergie.

Cet objectif est atteint par la prévision d'un dispositif de régulation de tension comprenant un régulateur de tension pour réguler une tension continue fournie par un générateur de tension, le régulateur de tension comprenant des moyens pour arrêter ou activer le générateur de tension selon que la tension à réguler est supérieure ou inférieure à une tension de consigne.

Selon l'invention, le dispositif comprend un limiteur de tension ayant une première tension de seuil supérieure à la tension de consigne pour écrêter une surtension transitoire supérieure à la première tension de seuil, apparaissant dans la tension à réguler.

Selon un mode de réalisation de l'invention, le régulateur de tension comprend :
- un circuit abaisseur de tension fournissant à partir de la tension à réguler une tension abaissée inférieure à la tension à réguler, et
- un comparateur pour comparer la tension abaissée à une seconde tension de seuil, et pour arrêter ou activer le générateur de tension selon que la tension abaissée est supérieure ou inférieure à la seconde tension de seuil.

Selon un mode de réalisation de l'invention, le limiteur de tension comprend le circuit abaisseur de tension fournissant la tension abaissée, et un circuit limiteur de tension recevant en entrée la tension abaissée et présentant une tension de seuil de conduction.

Selon un mode de réalisation de l'invention, le circuit abaisseur de tension comprend au moins une diode Zener agencée entre la sortie du générateur de la tension à réguler et une source de courant.

Selon un mode de réalisation de l'invention, la source de courant est agencée entre la sortie du circuit abaisseur de tension et la masse.

Selon un mode de réalisation de l'invention, le circuit limiteur de tension comprend au moins une diode Zener agencée entre la sortie du circuit abaisseur de tension et la masse.

Selon un mode de réalisation de l'invention, le dispositif de régulation de tension comprend un circuit de détection pour détecter une surtension transitoire.

Selon un mode de réalisation de l'invention, le dispositif de régulation de tension comprend des moyens pour mémoriser une surtension transitoire détectée.

Selon un mode de réalisation de l'invention, le circuit de détection définit un seuil de tension de détection que la tension à réguler doit franchir pour qu'une surtension soit détectée, la tension de détection étant comprise entre la tension de consigne et la première tension de seuil.

L'invention concerne également un circuit intégré comprenant un générateur de tension fournissant une tension. Selon l'invention, le circuit intégré comprend un dispositif de régulation de tension tel que définit précédemment, pour réguler la tension fournie par le générateur de tension.

Selon un mode de réalisation de l'invention, le générateur de tension est un circuit survolteur.

Selon un mode de réalisation de l'invention, le générateur de tension comprend une pompe de charge.

Selon un mode de réalisation de l'invention, le circuit intégré comprend une mémoire non volatile alimentée en haute tension par le générateur de tension.

Selon un mode de réalisation de l'invention, le dispositif de régulation comprend un circuit de détection d'une surtension, et la mémoire comprend un registre d'état comportant un bit de mémorisation de l'apparition d'une surtension détectée par le circuit de détection.

Selon un mode de réalisation de l'invention, la mémoire comprend au moins une cellule mémoire réservée pour mémoriser les surtensions détectées par le circuit de détection.

L'invention concerne également un procédé de régulation d'une tension continue fournie par un générateur de tension, le procédé comprenant des étapes consistant à arrêter ou activer le générateur de tension selon que la tension à réguler est supérieure ou inférieure à une tension de consigne.

Selon l'invention, le procédé comprend des étapes consistant à écrêter une surtension transitoire supérieure à une première tension de seuil, apparaissant dans la tension à réguler, la première tension de seuil étant supérieure à la tension de consigne.

Selon un mode de réalisation de l'invention, le procédé comprend des étapes consistant à :
- abaisser la tension à réguler pour obtenir une tension abaissée inférieure à la tension à réguler,
- comparer la tension abaissée à une seconde tension de seuil, et
- arrêter ou activer le générateur de tension selon que la tension abaissée est supérieure ou inférieure à la seconde tension de seuil.

Selon un mode de réalisation de l'invention, le circuit abaisseur de tension est polarisé par une source de courant.

Selon un mode de réalisation de l'invention, le procédé comprend une étape de détection d'une surtension transitoire, par comparaison de la tension à réguler à une tension de seuil de détection, la tension de détection étant comprise entre la tension de consigne et la première tension de seuil.

Selon un mode de réalisation de l'invention, le procédé comprend une étape de mémorisation de la détection d'une surtension transitoire.

Selon un mode de réalisation de l'invention, le procédé comprend des étapes de comptage des surtensions transitoires détectées.

Ces objets, caractéristiques et avantages ainsi que d'autres de la présente invention seront exposés plus en détail dans la description suivante d'un mode de réalisation de l'invention, faite à titre non limitatif en relation avec les figures jointes parmi lesquelles :
- la figure 1 précédemment décrite représente schématiquement un circuit survolteur équipé d'un limiteur de tension classique,
- la figure 2 précédemment décrite représente schématiquement un circuit survolteur équipé d'un régulateur de tension classique,
- les figures 3A et 3B précédemment décrites illustrent sous la forme de chronogrammes le fonctionnement du régulateur représenté sur la figure 2,
- la figure 4 est un schéma de principe d'un régulateur de tension selon la présente invention,
- la figure 5 représente un mode de réalisation du régulateur selon l'invention, et
- la figure 6 représente un exemple de circuit survolteur,
- la figure 7 représente sous la forme de blocs une mémoire équipée du dispositif de régulation selon l'invention.

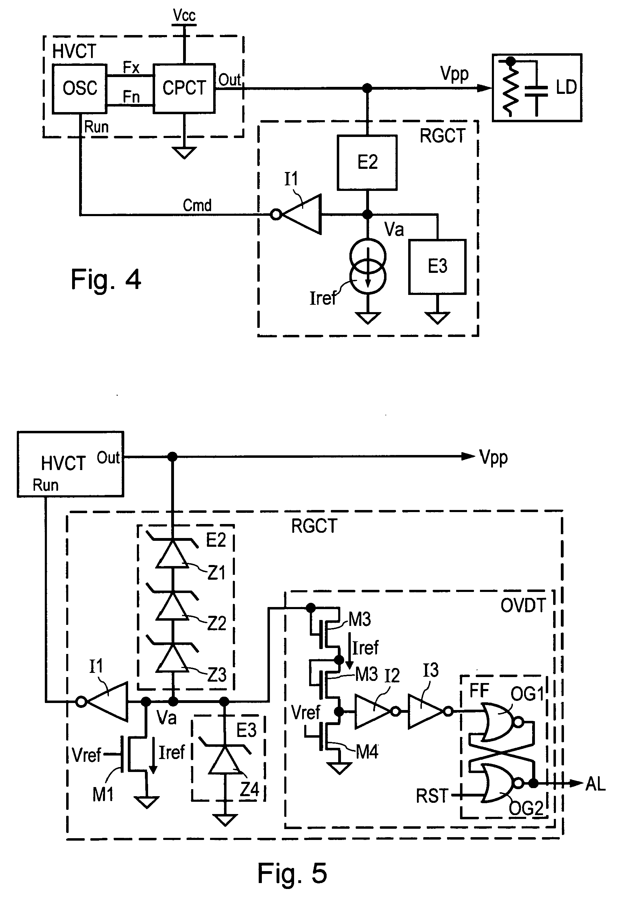

La figure 4 est un schéma de principe d'un régulateur de tension RGCT selon l'invention. Le régulateur de tension est agencé entre la sortie OUT d'un circuit survolteur HVCT et la masse. Le circuit survolteur comprend par exemple une pompe de charge alimentée par une tension d'alimentation Vcc et fournissant une haute tension Vpp. La tension Vpp est appliquée à une charge LD. La charge LD est par exemple une charge capacitive et résistive dont la capacité représente des capacités parasites de grille de cellules mémoire à effacer ou à programmer, dans le cas d'une mémoire de type EEPROM ou FLASH.

Le régulateur de tension RGCT comprend un circuit abaisseur de tension E2 qui abaisse la tension Vpp d'une valeur constante, une source de courant Iref et un inverseur I1. Le circuit E2 est connecté en entrée à la sortie Out du survolteur HVCT, et en sortie, à une borne de la source de courant dont l'autre borne est connectée à la masse. L'entrée de l'inverseur I1 est connectée à la sortie du circuit E2. La sortie de l'inverseur est connectée à une borne de commande Run du circuit survolteur.

Selon l'invention, le régulateur de tension RGCT comprend un circuit limiteur de tension E3 connecté à la sortie du circuit abaisseur de tension E2, en parallèle avec la source de courant Iref. La tension de seuil du circuit E3 est choisie de manière à ce qu'en l'absence de surtension aucun courant ne passe dans le circuit E3.

En l'absence de surtension, le régulateur de tension RGCT présente donc un fonctionnement analogue à celui du régulateur RGCT1 représenté sur la figure 2. Le circuit survolteur HVCT est arrêté lorsque sa tension de sortie Vpp dépasse une tension de consigne Vreg, et activé lorsque sa tension de sortie repasse en dessous de la tension Vreg. Il en résulte que la consommation électrique du régulateur RGCT est équivalente à celle du régulateur RGCT1

En cas d'apparition d'une surtension transitoire, la tension de basculement VI1 de l'inverseur I1 est atteinte par la tension abaissée Va. Le circuit survolteur HVCT est donc arrêté, mais avec un certain retard à la suite de l'apparition de la surtension. La tension Va à l'entrée du circuit E3 atteint la tension de seuil de conduction VE3 de ce dernier qui devient alors conducteur. Il en résulte que la surtension est évacuée dans les deux circuits E2 et E3 en série qui forment ensemble un circuit limiteur de tension ayant une tension de seuil Vth supérieure à la tension de consigne Vreg. Les circuits E2 et E3 sont adaptés pour supporter des courants importants.

Le régulateur selon l'invention fonctionne donc comme un limiteur de tension uniquement en cas de surtension transitoire. Il assure ainsi une régulation de tension performante sur le plan énergétique, tout en étant capable d'absorber les surtensions transitoires.

La figure 5 représente un mode de réalisation du régulateur de tension selon l'invention. Sur la figure 5, le régulateur de tension RGCT comprend un circuit abaisseur de tension E2 recevant en entrée la tension Vpp à réguler en sortie du circuit survolteur, ainsi qu'un circuit limiteur de tension E3, une source de courant Iref et un inverseur I1 connectés à la sortie du circuit E2. La sortie de l'inverseur I1 fournit un signal de commande Cmd au survolteur HVCT. La source de courant comprend un transistor M1 de type NMOS, dont le drain est connecté aux circuits E2 et E3, ainsi qu'à l'entrée de l'inverseur I1. La source du transistor M1 est à la masse et la grille reçoit une tension de référence Vref. Le circuit E2 comprend par exemple trois diodes Zener Z1, Z2, Z3 montées en inverse et agencées en série entre la sortie Out du survolteur HVCT et le drain du transistor M1. Le circuit E3 comprend une diode Zener Z4 montée en inverse entre le drain du transistor M1 et la masse.

A titre d'exemple, les diodes Zener Z1, Z2, Z3 sont au nombre de trois et présentent une tension de seuil de 5V. Il en résulte que la tension abaissée Va à l'entrée de l'inverseur I1 est égale à Vpp - 3 x 5 V. La tension de basculement VE1 de l'inverseur I1 est par exemple égale à 1 V. La tension de consigne Vreg de la tension Vpp est donc égale à 16 V. La tension de seuil de la diode Zener Z4 est choisie de manière à ce que la tension survoltée Vpp ne dépasse jamais une tension Vppmax. A titre d'exemple, la tension de seuil de conduction VE3 de la diode Z4 est choisie de l'ordre de 5 V. Il en résulte que la tension Vpp ne peut excéder une tension de seuil Vth égale à environ 20 V.

Le régulateur de tension RGCT comprend avantageusement un circuit de détection de surtensions OVDT comportant une entrée connectée au drain du transistor M1. Le circuit OVDT comprend un groupe de plusieurs transistors M3, M4 de type NMOS en série, les transistors M3 étant montés en diode (drain connecté à la grille). Le groupe de transistors M3, M4 qui comporte par exemple trois transistors, est connecté entre le drain du transistor M1 et la masse. La source du transistor M4 est connectée à la masse et la grille de ce transistor reçoit la tension de référence Vref. Le noeud de connexion entre l'un des transistors M3 et le transistor M4 est connecté à un inverseur I2 monté en série avec un autre inverseur I3 . La sortie de l'inverseur I3 est connectée à l'entrée d'une bascule FF de type RS dont la sortie fournit un signal AL indiquant si une surtension a été détectée. La bascule FF est par exemple réalisée à l'aide de deux portes logiques OG1, OG2 de type OU inversé, la sortie de l'inverseur 13 étant connectée à l'entrée de la porte OG1. La sortie de chacune des portes OG1, OG2 est connectée à une entrée de l'autre porte, la sortie de la porte OG2 fournissant le signal AL. La bascule FF mémorise l'état de la sortie de l'inverseur I3 jusqu'à ce qu'un signal d'initialisation RST soit appliqué sur une entrée de la porte OG2. Le basculement de l'inverseur I2 entraîne le basculement de l'inverseur I3 et donc le passage à 1 de l'état de la bascule FF et du signal AL.

Le nombre n de transistors M3 et l'inverseur 12 sont choisis de manière à ce que seule une surtension fasse basculer l'inverseur I2. En d'autres termes, il faut que l'inverseur I2 bascule lorsque la tension Vpp atteint une tension de seuil de détection Vdet légèrement supérieure à la tension de consigne Vreg mais inférieure à la tension de seuil Vth. Ainsi, la valeur maximum de la tension Va à l'entrée de l'inverseur I2 est égale à la tension maximum à l'entrée de l'inverseur I1 diminuée de n fois la tension de seuil d'un transistor M3 et de la tension de basculement de l'inverseur 12. Dans l'exemple de la figure 5, il y a deux transistors M3 qui présentent par exemple une tension de seuil de 1 V. L'inverseur I2 est choisi de manière à présenter une tension de seuil par exemple égale à 1 V. Une surtension sera donc détectée si la tension survoltée Vpp dépasse la tension de seuil de détection Vdet égale à la tension de seuil de conduction VE2 du circuit E2 augmentée de 3 V (2 x 1 V + 1 V), soit 18 V, la tension de consigne Vreg étant égale à 16 V.

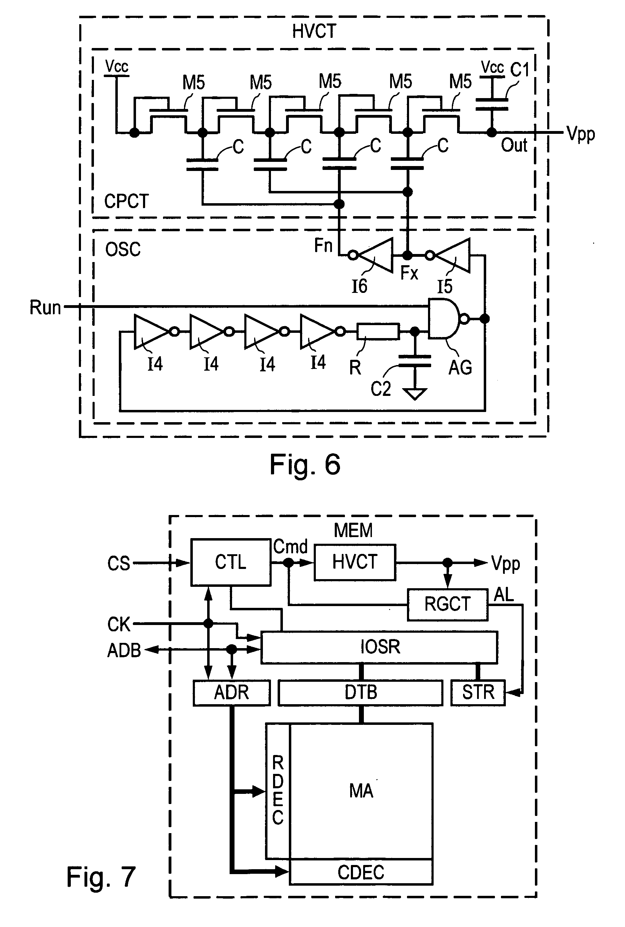

La figure 6 représente un exemple de circuit survolteur HVCT du type pompe de charge, fournissant sur une sortie Out la tension survoltée Vpp. Le circuit HVCT comprend une pompe de charge CPCT et un oscillateur en anneau OSC.

La pompe de charge CPCT comprend plusieurs étages de pompage en cascade (4 étages dans l'exemple de la figure), chaque étage comprenant un transistor M5 monté en diode (grille connectée au drain) connecté en parallèle avec un condensateur C. Le drain du transistor M2 du premier étage reçoit la tension d'alimentation Vcc de l'ordre de 2 à 5 V. La source du transistor M2 du dernier (quatrième) étage est connectée à la borne de sortie Out fournissant la tension survoltée Vpp. La borne de sortie Out est reliée à la source de tension d'alimentation Vcc par l'intermédiaire d'un condensateur de filtrage C1. Les condensateurs C des étages ayant un rang impair (premier et troisième) dans le circuit reçoivent un premier signal de pompage Fx, tandis que les condensateurs des étages ayant un rang pair (second et quatrième) reçoivent un second signal de pompage Fn.

L'oscillateur OSC comprend des inverseurs I4 (par exemple 4) montés en cascade avec une résistance R, un condensateur C2 monté en parallèle entre la résistance R et la masse, et une porte AG de type ET inversée dont une entrée est connectée au noeud de connexion entre la résistance R et le condensateur C2. La sortie de la porte AG est rebouclée sur l'entrée du premier des inverseurs I4. Une autre entrée de la porte AG est connectée à la borne de commande Run de marche/arrêt du circuit HVCT. La sortie de la porte AG est connectée à deux inverseurs I5, I6 montés en série. La sortie de l'inverseur 15 fournit un premier signal d'horloge constituant le signal de pompage Fx, et la sortie de l'inverseur I6 fournit un second signal d'horloge en opposition de phase avec le premier, constituant le second signal de pompage Fn.

L'amplitude de la tension Vpp dépend du nombre d'étages de pompage en cascade et est proportionnelle à la tension Vcc.

Le régulateur de tension selon l'invention peut avantageusement être intégré dans une mémoire non volatile, par exemple du type comportant un bus d'entrée série conforme au standard SPI ou I2C.

La figure 7 représente une mémoire MEM comprenant un plan mémoire MA, un circuit de contrôle CTL, un circuit survolteur HVCT fournissant une haute tension Vpp, un registre d'adresse ADR, un registre de donnée DTB, un registre d'entrée/sortie IOSR, un registre d'état STR, un décodeur de ligne RDEC et un décodeur de colonne CDEC. Le circuit de contrôle CTL reçoit de l'extérieur un signal de sélection CS et un signal d'horloge CK. Le circuit CTL commande le registre IOSR et le circuit HVCT, ainsi que le registre d'état STR. Les registres IOSR et ADR sont connectés à l'extérieur de la mémoire par un bus série ADB, par exemple de type SPI ou I2C. Les registres IOSR et ADR sont cadencés par le signal d'horloge CK. En mode d'écriture, le registre ADR reçoit de l'extérieur par le bus série ADB, une adresse de cellules mémoire, et le registre IOSR des données à mémoriser dans le plan mémoire MA. En mode de lecture, le registre ADR reçoit du bus ADB une adresse de lecture et le registre IOSR reçoit du plan mémoire MA une donnée lue, à envoyer sur le bus ADB en réponse à une commande de lecture. Les données lues ou à écrire transitent dans le registre DTB entre le plan mémoire MA et le registre IOSR. Le registre d'état contient des informations relatives à l'état de la mémoire MEM. L'adresse contenue dans le registre ADR est utilisée pour commander les décodeurs RDEC et CDEC qui permettent de sélectionner des cellules mémoire à programmer, à effacer ou à lire en fonction de l'adresse fournie par le registre d'adresse.

Selon l'invention, le circuit survolteur HVCT de la mémoire MEM est associé à un régulateur de tension RGCT tel que précédemment décrit en référence avec la figure 5. Le régulateur de tension commande le circuit survolteur HVCT et fournit un signal AL indiquant si une surtension est détectée par le circuit OVDT. Dans le cas d'un bus de type SPI, l'état du signal AL est avantageusement mémorisé par un bit du registre d'état STR. Dans ce cas, la bascule FF représentée sur la figure 5 n'est pas nécessaire. Dans le cas d'un bus I2C, l'état du signal AL peut être mémorisé dans une cellule mémoire en dehors du champ d'adressage normal de la mémoire MEM. L'état du signal AL peut ainsi être lu, en commandant l'accès en lecture à une adresse particulière de la mémoire.

La prévision d'un bit de détection de surtension dans un registre d'état ou dans une cellule mémoire de la mémoire MEM permet de faciliter la mise au point d'une application soumise à des contraintes de surtensions sur les tensions d'alimentation, ou à des décharges électrostatiques. En effet, certaines applications peuvent générer de nombreux rejets de fiabilité dus à des claquages d'oxydes de grille des transistors à grille flottante, soumis à la haute tension Vpp. Certains de ces claquages résultent d'une répercussion interne de surtensions apparaissant dans les tensions d'alimentation externes et notamment la tension Vcc. La prévision d'un bit de détection de surtension permet de déterminer les conditions à l'origine d'une surtension, et donc permet d'aider à supprimer de telles surtensions.

On peut prévoir une commande exécutable par le circuit de contrôle CTL permettant d'initialiser le bit de détection de surtension dans le registre d'état STR.

Alternativement, toutes les surtensions détectées par le circuit OVDT sont mémorisées dans des cellules mémoires du plan mémoire MA, par exemple sous la forme d'un compteur dénombrant toutes les surtensions dangereuses subies par la mémoire. Grâce à ce compteur, il est possible d'évaluer l'historique de la mémoire.

Il apparaîtra clairement à l'homme de l'art que la présente invention est susceptible de diverses autres variantes de réalisation et applications. Notamment, il n'est pas nécessaire que les fonctions d'abaissement de tension et de limitation de tension utilisent les mêmes composants (diodes Zener). Ces fonctions peuvent être totalement séparées, même si cette solution n'est pas optimum en terme de nombre de composants.

Il existe d'autres moyens que celui précédemment décrit pour détecter l'apparition d'une surtension. En effet, l'apparition d'une surtension peut par exemple être détectée par la mesure d'un courant dans le circuit limiteur de tension E2.

La présente invention est également susceptible de diverses applications. Bien que la description qui précède porte sur une application de l'invention au contrôle de la tension Vpp de programmation et d'effacement de cellules mémoires, il va de soi que l'invention s'applique plus généralement à un générateur de tension continue, et pas nécessairement à un survolteur.

## Revendications

1. Dispositif de régulation de tension comprenant un régulateur de tension (RGCT) pour réguler une tension continue (Vpp) fournie par un générateur de tension (HVCT), le régulateur de tension comprenant des moyens (I1) pour arrêter ou activer le générateur de tension selon que la tension à réguler est supérieure ou inférieure à une tension de consigne (Vreg),
**caractérisé en ce qu'**il comprend un limiteur de tension (E2, E3) ayant une première tension de seuil (Vth) supérieure à la tension de consigne (Vreg) pour écrêter une surtension transitoire (S2) supérieure à la première tension de seuil, apparaissant dans la tension à réguler (Vpp).

2. Dispositif selon la revendication 1, dans lequel le régulateur de tension (RGCT) comprend :
- un circuit abaisseur de tension (E2) fournissant à partir de la tension à réguler (Vpp) une tension abaissée (Va) inférieure à la tension à réguler, et
- un comparateur (I1) pour comparer la tension abaissée à une seconde tension de seuil (VI1), et pour arrêter ou activer le générateur de tension (HVCT) selon que la tension abaissée est supérieure ou inférieure à la seconde tension de seuil.

3. Dispositif selon la revendication 2, dans lequel le limiteur de tension (E2, E3) comprend le circuit abaisseur de tension (E2) fournissant la tension abaissée (Va), et un circuit limiteur de tension (E3) recevant en entrée la tension abaissée (Va) et présentant une tension de seuil de conduction (VE3).

4. Dispositif selon la revendication 2 ou 3, dans lequel le circuit abaisseur de tension (E2) comprend au moins une diode Zener (Z1, Z2, Z3) agencée entre la sortie du générateur de la tension à réguler (Vpp) et une source de courant (M1).

5. Dispositif selon la revendication 4, dans lequel la source de courant (M1) est agencée entre la sortie du circuit abaisseur de tension (E2) et la masse.

6. Dispositif selon l'une des revendications 2 à 5, dans lequel le circuit limiteur de tension (E3) comprend au moins une diode Zener (Z4) agencée entre la sortie du circuit abaisseur de tension (E2) et la masse.

7. Dispositif selon l'une des revendications 1 à 6, comprenant un circuit de détection (OVDT) pour détecter une surtension transitoire (S2).

8. Dispositif selon la revendication 7, comprenant des moyens (FF, STR, MA) pour mémoriser une surtension transitoire détectée.

9. Dispositif selon la revendication 7 ou 8, dans lequel le circuit de détection (OVDT) définit un seuil de tension de détection (Vdet) que la tension à réguler (Vpp) doit franchir pour qu'une surtension soit détectée, la tension de détection étant comprise entre la tension de consigne (Vreg) et la première tension de seuil (Vth).

10. Circuit intégré comprenant un générateur de tension (HVCT) fournissant une tension (Vpp),
**caractérisé en ce qu'**il comprend un dispositif de régulation de tension (RGCT) selon l'une des revendications 1 à 9, pour réguler la tension (Vpp) fournie par le générateur de tension (HVCT).

11. Circuit intégré selon la revendication 10, dans lequel le générateur de tension (HVCT) est un circuit survolteur.

12. Circuit intégré selon la revendication 10 ou 11, dans lequel le générateur de tension (HVCT) comprend une pompe de charge (CPCT).

13. Circuit intégré selon l'une des revendications 10 à 12, comprenant une mémoire non volatile (MEM) alimentée en haute tension par le générateur de tension (HVCT).

14. Circuit intégré selon la revendication 13, dans lequel le dispositif de régulation comprend un circuit de détection (OVDT) d'une surtension (S2), et la mémoire (MEM) comprend un registre d'état (STR) comportant un bit de mémorisation de l'apparition d'une surtension (S2) détectée par le circuit de détection.

15. Circuit intégré selon la revendication 13, dans lequel la mémoire (MEM) comprend au moins une cellule mémoire réservée pour mémoriser les surtensions (S2) détectées par le circuit de détection (OVDT).

16. Procédé de régulation d'une tension continue (Vpp) fournie par un générateur de tension (HVCT), le procédé comprenant des étapes consistant à arrêter ou activer le générateur de tension selon que la tension à réguler est supérieure ou inférieure à une tension de consigne (Vreg),
**caractérisé en ce qu'**il comprend des étapes consistant à écrêter une surtension transitoire (S2) supérieure à une première tension de seuil (Vth), apparaissant dans la tension à réguler (Vpp), la première tension de seuil étant supérieure à la tension de consigne (Vreg).

17. Procédé selon la revendication 16, comprenant des étapes consistant à :
- abaisser la tension à réguler (Vpp) pour obtenir une tension abaissée (Va) inférieure à la tension à réguler,
- comparer la tension abaissée à une seconde tension de seuil (VI1), et
- arrêter ou activer le générateur de tension (HVCT) selon que la tension abaissée est supérieure ou inférieure à la seconde tension de seuil.

18. Procédé selon la revendication 17, dans lequel le circuit abaisseur de tension est polarisé par une source de courant (M1).

19. Procédé selon l'une des revendications 16 à 18, comprenant une étape de détection d'une surtension transitoire (S2), par comparaison de la tension à réguler (Vpp) à une tension de seuil de détection (Vdet), la tension de détection étant comprise entre la tension de consigne (Vreg) et la première tension de seuil (Vth).

20. Procédé selon la revendication 19, comprenant une étape de mémorisation de la détection d'une surtension transitoire (S2).

21. Procédé selon la revendication 19 ou 20, comprenant des étapes de comptage des surtensions transitoires détectées.
